# DEMANDE DE BREVET EUROPEEN

(11) **EP 2 354 822 A1**
(43) Date de publication de la demande: **10.08.2011**
(21) Numéro de dépôt: 11153646.2
(22) Date de dépôt: 08.02.2011
(51) Int. Cl.: G02B 6/12, G02B 27/28, G02B 6/126

(54) **Coupleur optique intégré**

(30) Priorité: 09.02.2010 FR 1050890
(71) Demandeur: COMMISSARIAT A L'ENERGIE ATOMIQUE ET AUX ENERGIES ALTERNATIVES, 75015 Paris (FR)
(72) Inventeur: Mary, Alexandre, 38360, SASSENAGE (FR); Boutami, Salim, 38100, GRENOBLE (FR); Espiau de Lamaestra, Roch, 38000, GRENOBLE (FR); Le Perchec, Jérôme, 38000, GRENOBLE (FR)
(74) Mandataire: de Beaumont, Michel

(57) **Abrégé**

L'invention concerne un coupleur optique intégré comprenant dans le milieu séparant un premier guide d'onde intégré (G1) et un deuxième guide d'onde intégré sensiblement parallèles (G2), une succession de lamelles (30) parallèles entre elles et orthogonales à la direction générale des guides d'onde, lesdites lamelles étant en un matériau dont l'absorption empêche la propagation d'une onde électromagnétique dans son volume et ayant :
une longueur H égale à kλ/2nₘᵢₗᵢₑᵤ, où k est un entier, λ est la longueur d'onde centrale utilisée, et nₘᵢₗᵢₑᵤ est l'indice optique du milieu entre les guides d'onde ;
un pas P inférieur à λ/2nₘᵢₗᵢₑᵤ ; et
des extrémités à une distance inférieure à λ/10 des guides d'onde.

## Description

### Domaine de l'invention

La présente invention concerne le domaine des composants optiques intégrés, et plus particulièrement des composants optiques intégrés passifs de couplage entre guides d'onde intégrés, tels que séparateurs de polarisation, filtres et diviseurs.

### Exposé de l'art antérieur

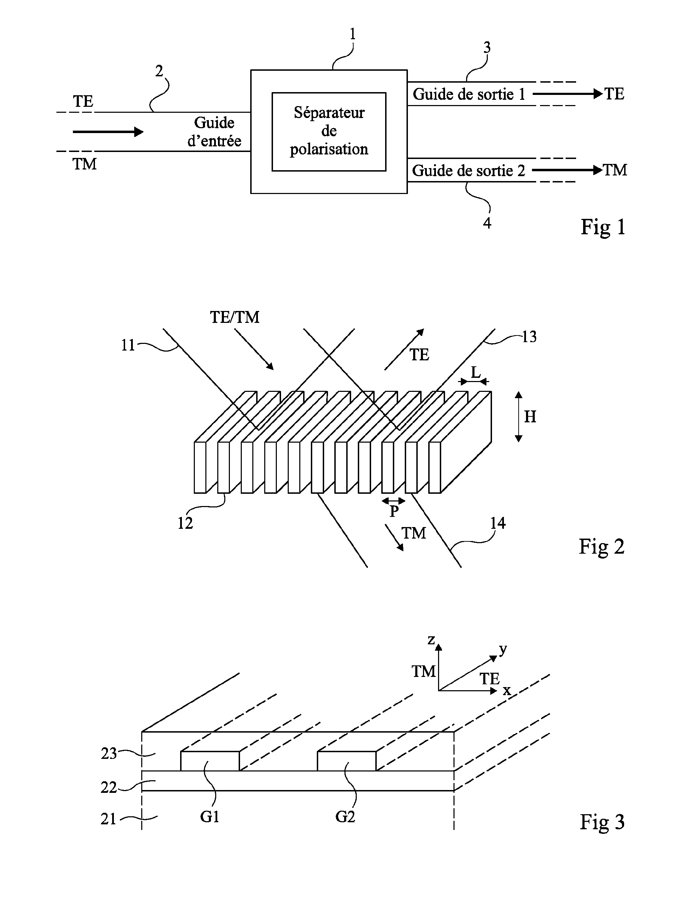

Comme l'illustre la figure 1, un séparateur de polarisation est un dispositif 1 auquel sont associés un guide d'onde d'entrée 2 et deux guides d'onde de sortie 3 et 4, l'un des guides de sortie étant éventuellement constitué de la continuation du guide d'entrée. Ce dispositif est destiné à extraire d'un guide d'onde d'entrée contenant des modes transverse électrique (TE) et transverse magnétique (TM) une partie au moins de l'un des modes de polarisation, par exemple le mode TM dans le cas représenté en figure 1.

Un exemple de séparateur de polarisation intégré mais non associé à des guides d'onde est illustré en figure 2. Ce séparateur de polarisation est par exemple décrit dans un article de Junming Zhao et al. publié dans Applied Physics Letters 92, 071114 (2008). Un faisceau incident 11 arrive sous incidence oblique sur la tranche d'une succession de lamelles métalliques parallèles 12 formées dans un matériau isolant, et il est décrit que, pour un dimensionnement convenable, on obtient un faisceau réfléchi 13 contenant la composante de polarisation TE du faisceau incident et un faisceau transmis 14 contenant la polarisation TM du faisceau.

Par ailleurs, dans le domaine des circuits intégrés optiques, dans lesquels les ondes se propagent à l'intérieur de guides d'onde formés dans ou sur un matériau support, on a développé divers autres types de séparateurs de polarisation séparant les composantes TE et TM de l'onde transportée par un guide d'onde d'entrée entre la continuation de ce guide d'onde et un autre guide d'onde, par exemple des structures en Y ou des structures à cristaux photoniques.

Néanmoins, les structures connues présentent l'inconvénient que la surface nécessaire à la séparation de polarisation présente des dimensions relativement importantes, couramment d'une longueur de 10 à 100 fois la longueur d'onde de la lumière qui se propage dans les guides d'onde. De plus, ces structures sont souvent complexes à fabriquer et nécessitent un dimensionnement extrêmement précis de leurs éléments.

### Résumé

Un objet d'un mode de réalisation de la présente invention est de prévoir un coupleur, constituant un séparateur de polarisation ou un diviseur d'intensité, de faible encombrement.

Un autre objet d'un mode de réalisation de la présente invention est de prévoir un tel coupleur dans lequel les guides d'onde d'entrée et de sortie peuvent être parallèles.

Un autre objet d'un mode de réalisation de la présente invention est de prévoir un coupleur réalisable par les techniques usuelles de réalisation de circuits intégrés optiques.

Pour atteindre ces objets ainsi que d'autres, un mode de réalisation de la présente invention prévoit un coupleur optique intégré comprenant dans le milieu séparant un premier guide d'onde intégré et un deuxième guide d'onde intégré sensiblement parallèles, une succession de lamelles parallèles entre elles et orthogonales à la direction générale des guides d'onde, lesdites lamelles étant en un matériau dont l'absorption empêche la propagation d'une onde électromagnétique dans son volume et ayant :
une longueur H égale à kλ/2nₘᵢₗᵢₑᵤ, où k est un entier, λ est la longueur d'onde centrale utilisée, et nₘᵢₗᵢₑᵤ est l'indice optique du milieu entre les guides d'onde ;
un pas P inférieur à λ/2nₘᵢₗᵢₑᵤ ; et
des extrémités à une distance inférieure à λ/10 des guides d'onde.

Selon un mode de réalisation de la présente invention, le coupleur est utilisé comme séparateur de polarisation, et de la lumière comprenant des polarisations orthogonales, TE et TM, est envoyée dans le premier guide d'onde et au moins une partie de la lumière d'une certaine polarisation, TM, est envoyée dans le deuxième guide d'onde.

Selon un mode de réalisation de la présente invention, le coupleur est utilisé comme diviseur d'intensité, et de la lumière d'une certaine polarisation, TM, est envoyée dans le premier guide d'onde et une partie de l'intensité de cette lumière est transférée dans le deuxième guide d'onde.

Selon un mode de réalisation de la présente invention, les lamelles sont métalliques.

Selon un mode de réalisation de la présente invention, les lamelles d'entrée et de sortie sont plus éloignées, respectivement, du guide d'onde d'entrée et du guide d'onde de sortie.

Selon un mode de réalisation de la présente invention, chaque guide d'onde est constitué d'une bande de coeur en un matériau d'un premier indice entourée d'un matériau à plus bas indice.

Selon un mode de réalisation de la présente invention, le matériau à haut indice est du silicium et le matériau à bas indice est de l'oxyde de silicium.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 représente schématiquement un séparateur de polarisation ;
la figure 2 est une vue en perspective d'un séparateur de polarisation connu ;
la figure 3 représente schématiquement deux guides d'onde intégrés parallèles ;
la figure 4 représente un mode de réalisation d'un dispositif de couplage entre guides d'onde ;
les figures 5, 6A, 6B, 7A, 7B sont des vues en perspective illustrant diverses variantes d'un dispositif de couplage entre guides d'onde selon des modes de réalisation de la présente invention ;
la figure 8 représente une courbe de transmission et de réflexion en fonction d'un premier paramètre ;
la figure 9 représente une courbe de transmission en fonction d'un second paramètre ;
la figure 10 représente une courbe de transmission en fonction d'un troisième paramètre ;
la figure 11 représente un diviseur selon un mode de réalisation de la présente invention ; et
la figure 12 représente une variante d'un coupleur selon un mode de réalisation de la présente invention.

Par souci de clarté, de mêmes éléments ont été désignés par de mêmes références dans les différentes figures et, de plus, comme cela est habituel dans la représentation des circuits intégrés, les diverses vues en coupe et en perspective ne sont pas tracées à l'échelle.

### Description détaillée

La présente invention s'applique à un couplage entre guides d'onde intégrés. On considérera ici des phénomènes se produisant en optique intégrée.

La figure 3 représente un exemple de réalisation de guides d'onde dans un circuit intégré optique. Plus particulièrement, la figure 1 représente deux guides d'onde G1 et G2 constitués d'un coeur en un matériau ayant un premier indice entouré d'un matériau ayant un deuxième indice, généralement plus faible que le premier indice. Dans l'exemple représenté en figure 3, on a représenté une structure SOI dans laquelle, sur un support 21, généralement une plaque de silicium, reposent une couche isolante 22 et une couche de silicium 23 dans laquelle sont gravés des coeurs de guides d'onde G1 et G2. L'ensemble est entouré d'une couche d'oxyde de silicium 23. Les guides d'onde s'étendent selon la direction y et on définit deux modes de polarisation d'une onde susceptible de circuler dans ces guides d'onde, à savoir une polarisation TE selon l'axe des x et une polarisation TM selon l'axe des z ou inversement. Bien entendu, de très nombreuses autres réalisations des guides d'onde existent, il pourra exister des guides d'onde à gradient d'indice, ou des guides d'onde formés dans des couches différentes de celles mentionnées ci-dessus. De façon générale, les guides d'onde ont une section rectangulaire ; leur grande dimension peut s'étendre parallèlement au support de la façon représentée ou perpendiculairement au support.

Dans les structures courantes actuelles, les dimensions des coeurs de guides d'onde sont inférieures à la longueur d'onde qu'ils doivent propager, c'est-à-dire par exemple de l'ordre de 200 par 50 nm pour une longueur d'onde de 1,5 µm. Dans la suite de la présente description, les guides d'onde seront représentés de façon très schématique mais on comprendra qu'ils correspondent à des structures telles que celle de la figure 3.

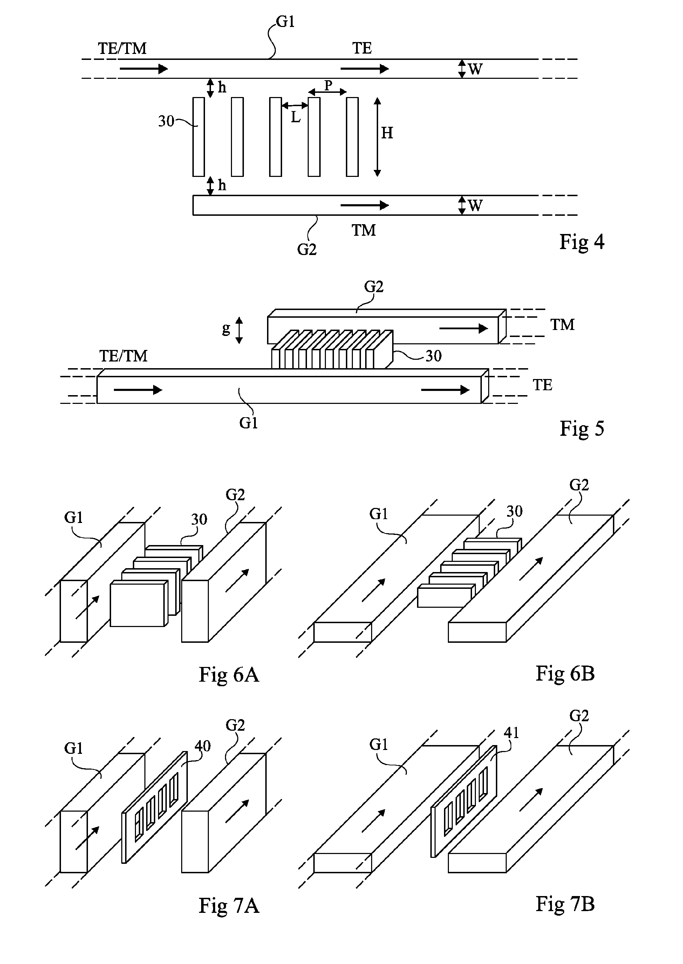

La figure 4 est une vue de dessus schématique d'un dispositif de couplage. Deux guides d'onde G1 et G2 sont disposés de façon sensiblement parallèle à une distance suffisante pour qu'il n'y ait pas de couplage direct entre eux. Entre ces guides d'onde, est placé un ensemble de lamelles métalliques 30 très proches les unes des autres, sensiblement de même hauteur H dans le mode de réalisation représenté. Les lamelles sont placées à une distance h de chacun des guides, se répètent à un pas P et sont à une distance L les unes des autres.

Si la valeur h est suffisamment faible, il y a un couplage par ondes évanescentes entre chaque guide d'onde et la structure à lamelles parallèles et celle-ci couple du guide d'onde G1 au guide d'onde G2 une grande partie du mode TM, le mode TE demeurant dans le guide d'onde G1.

De préférence, les paramètres H, P, L et h sont choisis de la façon suivante :
- la longueur H est un multiple entier k de la demi longueur d'onde divisé par l'indice du milieu dans lequel les lamelles sont placées, soit H=kλ/2nₘᵢₗᵢₑᵤ ;
- le pas P est inférieur à la demi longueur d'onde, par exemple compris entre λ/8nₘᵢₗᵢₑᵤ et λ/2nₘᵢₗᵢₑᵤ, la distance L entre lamelles étant choisie de façon arbitraire ; et
- les extrémités des lamelles sont à une distance h des guides nettement inférieure au dixième de la longueur d'onde centrale de la lumière qui se propage dans le guide d'onde G1.

Les figures 5, 6A, 6B, 7A et 7B sont des vues en perspective illustrant divers exemples de réalisation possibles des lamelles.

Les réalisations des figures 5, 6A et 6B se comprennent d'elles même en regardant les figures.

Dans le cas des figures 7A et 7B, plutôt que de prévoir des lamelles parallèles, on prévoit une grille ou plaque perforée, 40 en figure 7A et 41 en figure 7B, dans laquelle les ouvertures sont dimensionnées pour que, comme dans le cas des lamelles parallèles il se produise un couplage par onde de surface (exemple : mode plasmon, phonons, onde de Zenneck-Sommerfield) entre les guides d'onde. Dans ce cas notamment, étant donné que la structure de couplage est très mince, il peut être souhaitable d'écarter les guides G1 et G2 en dehors de la zone de couplage pour éviter un couplage parasite direct entre les guides.

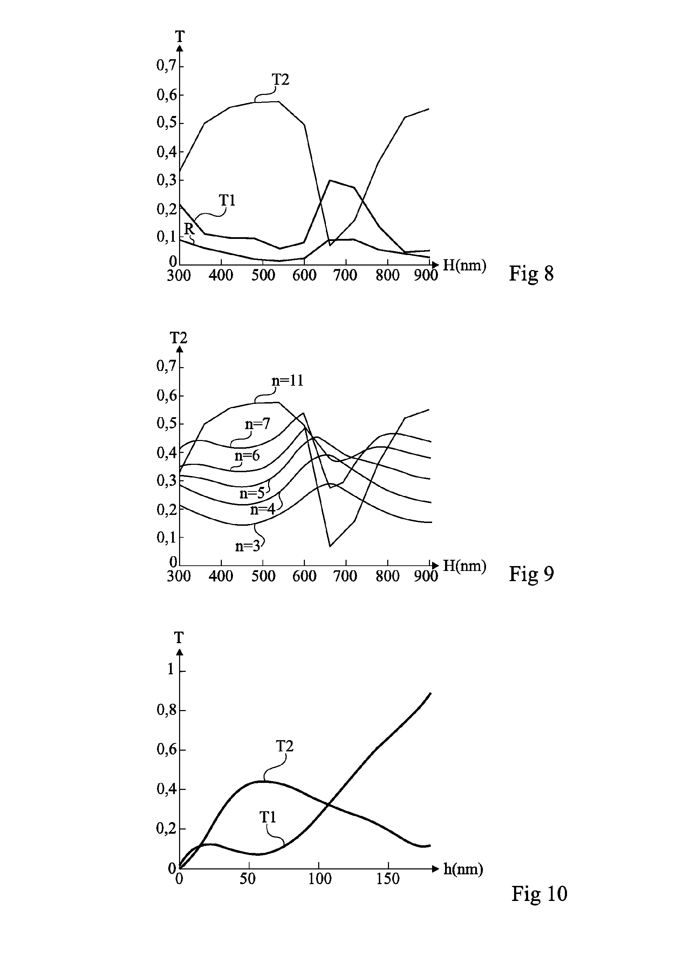

Les courbes des figures 8, 9 et 10 donnent des exemples de variation de la transmission entre guides dans diverses conditions. Dans ces figures :
- T1 désigne la transmission du guide G1 au guide G1, c'est-à-dire ce qui demeure dans le guide G1 après passage par le coupleur ;
- T2 désigne la transmission du guide G1 au guide G2 ; et
- R désigne la réflexion vers l'arrière dans le guide G1.

On notera qu'une partie de l'énergie incidente est absorbée dans le coupleur, ce qui explique que la somme des intensités sortantes n'est pas égale à l'intensité entrante.

Ces diverses courbes sont tracées dans le cas particulier où la longueur d'onde est de 1,5 µm, c'est-à-dire une lumière dans le proche infrarouge couramment utilisée dans le domaine des télécommunications, et pour un pas du réseau coupleur égal à 300 nm.

La figure 8 indique pour le mode de polarisation TM, en fonction du paramètre H (longueur des plaques), la proportion T2 transférée dans le guide G2, la proportion T1 restant dans le guide G1, et la proportion réfléchie R. On voit que l'on a un transfert important (supérieur à 50 %) du mode TM vers le guide d'onde G2 (courbe T2) pour une assez large plage de valeurs de H (de 400 à 600 nm), et pour des multiples de ces valeurs. De plus à l'intérieur de ces plages seule une très petite proportion du mode TM (moins de 5 %) demeure dans le guide G1. Selon un avantage de la structure proposée, contrairement à la plupart des coupleurs connus, il existe une large tolérance de paramètres. De même, des résultats satisfaisants sont obtenus même si les valeurs h, P et L ne sont pas strictement respectées dans une proportion d'au moins 20 %. Le coupleur décrit ici est donc tolérant aux dérives de fabrication.

La figure 9 représente la proportion T2 du mode TM transférée dans le guide G2 pour divers nombres n de lamelles, respectivement 3, 4, 5, 6, 7 et 11. La courbe de la figure 8 correspondait au cas de 11 lamelles. On voit que la proportion du mode TM transférée est non négligeable (supérieure à 20 %) même pour seulement quatre lamelles et que l'on atteint un transfert de l'ordre de 60 % pour un plus grand nombre de lamelles (n=11). En se rappelant que le pas des lamelles est inférieur à λ/2nₘᵢₗᵢₑᵤ, si on n'utilise que quatre lamelles, l'encombrement longitudinal du coupleur décrit ici sera nettement inférieur à la valeur de la longueur d'onde alors que dans les dispositifs connus, cet encombrement était d'au moins de 10 à 100 fois la longueur d'onde.

La figure 10 représente les taux de transfert T1 et T2 pour le mode TM du guide d'onde G1 vers lui-même et du guide d'onde G1 vers le guide d'onde G2 en fonction de la distance h entre la limite des lamelles décrites précédemment et chaque guide d'onde. On voit à nouveau que le choix de h peut être fait dans une plage relativement grande, de 40 à 70 nm pour λ=1,5 µm.

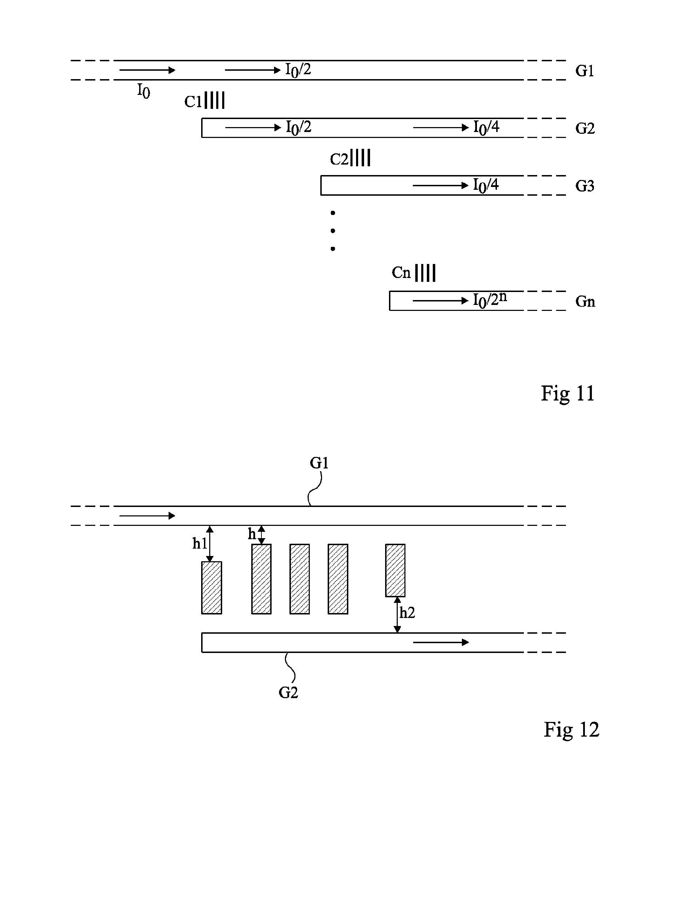

On a décrit jusqu'à présent un coupleur fonctionnant essentiellement en séparateur de polarisation. On notera que ce dispositif peut également être utilisé comme diviseur d'intensité. Comme le représente la figure 11, si on envoie dans un premier guide G1 une onde polarisée TM, on pourra choisir un premier coupleur C1 pour que 50 % de l'intensité I₀ du mode TM passe dans un guide G2. On a alors un partage d'intensité I₀/2 dans chacun des guides G1 et G2. De même, on pourra procéder à des partages successifs jusqu'à obtenir dans un guide Gn une intensité I₀/2ⁿ.

Par ailleurs, on a décrit jusqu'à présent des réseaux de lamelles réguliers. On notera que le réseau pourra être irrégulier pour être plus tolérant en longueur d'onde et/ou pour éviter des réflexions parasites dans le guide d'entrée. On pourra par exemple utiliser une structure telle que celle de la figure 12 dans laquelle le coupleur comprend du côté entrée du guide G1 une première lamelle plus courte, c'est-à-dire à une distance h1 > h du guide G1. De même la dernière lamelle sera de préférence à une distance h2 > h du guide G2. Ceci réduit pour l'onde arrivant du guide G1 et pour l'onde entrant dans le guide G2 la discontinuité d'indice efficace et permet d'éviter des réflexions. Des résultats similaires pourraient être obtenus en choisissant des écarts variables entre les lamelles des côtés entrée et sortie du coupleur.

La réalisation d'un dispositif tel que celui décrit précédemment sera relativement facile à mettre en oeuvre à l'aide des techniques usuelles de fabrication de circuit intégré. Par exemple, une fois définis les guides d'onde G1 et G2 (voir figure 3), on pourra graver dans le milieu les séparant une succession de rainures et remplir ces rainures d'un métal tel que du cuivre, de l'aluminium, de l'or ou de l'argent.

Bien que la présente invention ait été décrite plus particulièrement en faisant référence à des matériaux particuliers, l'homme de l'art saura choisir les matériaux adaptés aux plages de longueur d'onde considérées pour réaliser des guides d'onde et des coupleurs à lamelles métalliques tels que décrits ici.

On n'a mentionné ici que des lamelles métalliques, ce qui correspond au matériau préféré dans le domaine du visible et de l'infrarouge. De façon générale, ces lamelles (ou grilles) seront de façon générale en un matériau dont l'absorption empêche la propagation d'une onde électromagnétique dans son volume. Par exemple, dans l'ultraviolet, ces lamelles pourront être en silicium ou en un polymère organique et, dans le domaine des térahertz, les lamelles pourront être en semi-conducteur (ex : InSb) ou en des composés ioniques comme le SiC.

Divers modes de réalisation avec diverses variantes ont été décrits ci-dessus. On notera que l'homme de l'art pourra combiner divers éléments de ces divers modes de réalisation et variantes sans faire preuve d'activité inventive.

## Revendications

1. Coupleur optique intégré comprenant dans le milieu séparant un premier guide d'onde intégré (G1) et un deuxième guide d'onde intégré sensiblement parallèles (G2), une succession de lamelles (30) parallèles entre elles et orthogonales à la direction générale des guides d'onde, lesdites lamelles étant en un matériau dont l'absorption empêche la propagation d'une onde électromagnétique dans son volume et ayant :
une longueur H égale à kλ/2nₘᵢₗᵢₑᵤ, où k est un entier, λ est la longueur d'onde centrale utilisée, et nₘᵢₗᵢₑᵤ est l'indice optique du milieu entre les guides d'onde ;
un pas P inférieur à λ/2nₘᵢₗᵢₑᵤ ; et
des extrémités à une distance inférieure à λ/10 des guides d'onde.

2. Coupleur selon la revendication 1, utilisé comme séparateur de polarisation, dans lequel de la lumière comprenant des polarisations orthogonales, TE et TM, est envoyée dans le premier guide d'onde et au moins une partie de la lumière d'une certaine polarisation, TM, est envoyée dans le deuxième guide d'onde.

3. Coupleur selon la revendication 1, utilisé en diviseur d'intensité, dans lequel de la lumière d'une certaine polarisation, TM, est envoyée dans le premier guide d'onde et une partie de l'intensité de cette lumière est transférée dans le deuxième guide d'onde.

4. Coupleur selon l'une quelconque des revendications 1 à 3, dans lequel lesdites lamelles sont métalliques.

5. Coupleur selon l'une quelconque des revendications 1 à 4, dans lequel les lamelles d'entrée et de sortie sont plus éloignées, respectivement, du guide d'onde d'entrée et du guide d'onde de sortie.

6. Coupleur selon l'une quelconque des revendications 1 à 5, dans lequel chaque guide d'onde est constitué d'une bande de coeur en un matériau d'un premier indice entourée d'un matériau à plus bas indice.

7. Coupleur selon la revendication 6, dans lequel le matériau à haut indice est du silicium et le matériau à bas indice est de l'oxyde de silicium.

8. Coupleur selon la revendication 1, dans lequel les valeurs indiquées sont respectées à 20 % près.
